# EUROPEAN PATENT APPLICATION

(11) **EP 0 522 686 A2**
(43) Date of publication of application: **13.01.1993**
(21) Application number: 92303981.2
(22) Date of filing: 01.05.1992
(51) Int. Cl.: B04C 5/13, B04C 5/103, B04C 5/00, B04C 5/081

(54) **Hydrocyclone separators for separating less and more dense liquids**

(30) Priority: 09.07.1991 US 727665; 16.09.1991 US 760590
(71) Applicant: KREBS ENGINEERS, Menlo Park, California 94025-9928 (US)
(72) Inventor: Grieve, Donald F., La Honda, California 94020 (US)
(74) Representative: Bayliss, Geoffrey Cyril

(57) **Abstract**

The disclosure relates to hydrocyclone separators for separating liquids of different densities such as oil and water. The separator has an axially elongated chamber (11), a feed inlet (21) for introducing liquid into the chamber at high velocity in a tangential direction so that the liquid rotates about the axis of the chamber, an overflow outlet (23) for removing the less dense liquid from the chamber, and an underflow outlet (14) for removing the more dense liquid from the chamber. A turbulence shield (18) is positioned between the feed inlet (21) and the axially disposed outlet (23) for isolating the overflow outlet from the effects of turbulence produced by the liquid entering the chamber. In some disclosed embodiments, the chamber is rotated about its axis to produce a centrifugal force which enhances separation of the liquids, and tapered impeller vanes which increase in radial extent away from the feed inlet gradually accelerate rotation of the liquids as they move away from the inlet.

## Description

This invention pertains generally to centrifugal separators and, more particularly, to cyclone separating apparatus for use with liquids of different densities, such as oil and water.

Cyclone separators have heretofore been provided for separating a variety of materials from each other in accordance with their relative densities, such as solid/liquid separations in the mining and chemical processing industries. Cyclones separators are also used for separating liquids of different densities such as oil and water, and one example of a cyclone with parameters optimized for separating oil and water is found in U.S. Patent 4,964,994. Other examples of liquid/liquid separators designed for separating oil and water are found in U.S. Patents 4,576,724, 4,721,565, 4,747,490 and 4,876,016.

In a liquid/liquid separator, the liquid is typically introduced into a chamber at high velocity in a tangential direction to produce centrifugal forces which separate the liquid into components of greater and lesser density, with the lighter or less dense liquid being concentrated in a core at the axis of the chamber and the heavier or more dense liquid being concentrated toward the outer wall. The lighter liquid is usually removed through an overflow outlet at the end of the chamber near the feed inlet, and the heavier liquid is removed through an underflow outlet at the other end.

In some cyclones, the chamber is stationary, and in others it rotates to enhance the separation forces. The additional force produced by rotation of the chamber is particularly helpful in separating two liquids where greater separation forces are required than with a solid and a liquid or with two solids.

The high velocity of the liquid at the feed inlet can create a turbulence which extends throughout the entire cross-section of the chamber near the inlet, producing instability in the core of lighter or less dense liquid and reducing the efficiency with which this portion of the liquid is collected at the overflow outlet. The turbulence can also produce a so-called "short circuiting" effect in which some of the incoming liquid passes directly to the overflow outlet without being separated into its heavier and lighter components.

U.S. Patent 4,702,837 shows an oil/water separator in which a mixture of oil and water is introduced in an axial direction into the upstream end of a rotating cylindrical chamber, with the heavier water and the lighter oil being removed though annular and axial openings, respectively, at the downstream end of the chamber. With such a system, it is common to employ impeller type vanes to impart rotation to the liquid, and these rotating vanes produce a highly turbulent condition which causes short circuiting of the incoming mixture directly to the overflow outlet and also interferes with the thin, fragile core of oil, thus reducing the efficiency of the separator.

It is in general an object of the invention to provide a new and improved hydrocyclone separator.

Another object of the invention is to provide a hydrocyclone separator of the above character which overcomes the limitations and disadvantages of separators heretofore provided.

Another object of the invention is to provide a hydrocyclone separator of the above character which is particularly suited for use in separating oil and water.

These and other objects are achieved in accordance with the invention by providing a hydrocyclone separator having an axially elongated chamber, a feed inlet for introducing liquid into the chamber at high velocity in a tangential direction so that the liquid rotates about the axis of the chamber, an axially disposed outlet for removing the less dense liquid from the chamber, means for removing the more dense liquid from the chamber, and a turbulence shield interposed between the feed inlet and the axially disposed outlet for isolating the outlet from the effects of turbulence produced by the liquid entering the chamber. In some disclosed embodiments, the chamber is rotated about its axis to produce a centrifugal force which enhances separation of the liquids, and tapered impeller vanes which increase in radial extent away from the feed inlet gradually accelerate rotation of the liquids as they move away from the inlet.

Figure 1 is a cross-sectional view, somewhat schematic, of one embodiment of a hydrocyclone separator incorporating the invention.

Figures 2 and 3 are graphical representations of the separation efficiency of a hydrocyclone separator according to the invention.

Figure 4 is a fragmentary cross-sectional view of a portion of an embodiment similar to the embodiment of Figure 1.

Figure 5 is a cross-sectional view taken along line 5-5 in Figure 4.

Figures 6 and 7 are cross-sectional views, somewhat schematic, of additional embodiments of a hydrocyclone separator incorporating the invention.

Figure 8 is a top plan view of one embodiment of a hydrocyclone separator according to the invention.

Figure 9 is a front elevational view of the embodiment of Figure 8.

Figure 10 is an enlarged fragmentary sectional view of the embodiment of Figure 8.

Figure 11 is an enlarged fragmentary sectional view, similar to Figure 10, of another embodiment of a hydrocyclone separator according to the invention.

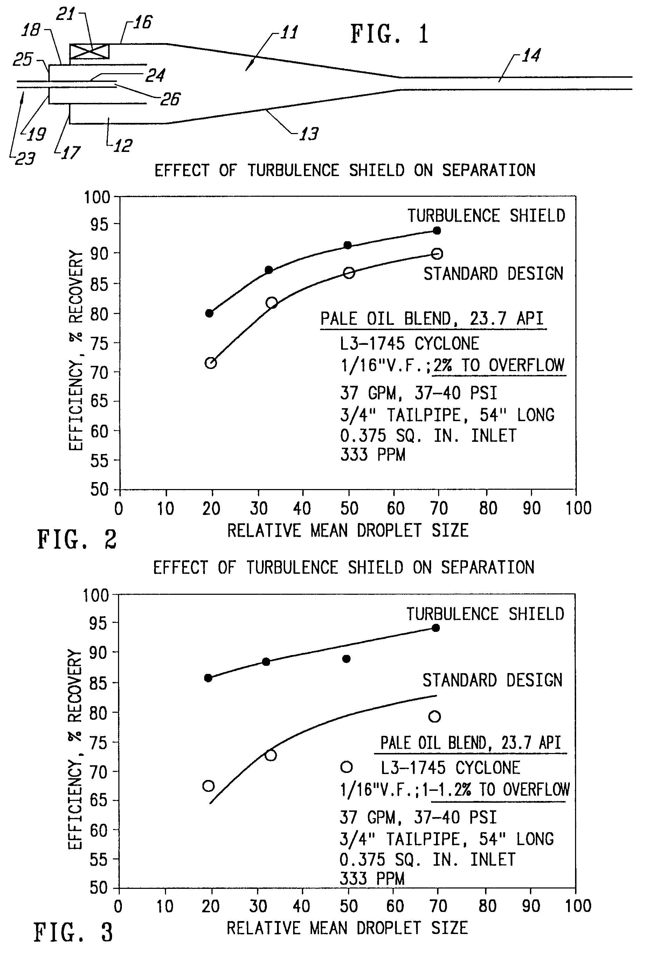

As illustrated in Figure 1, the hydrocyclone separator has an axially elongated chamber 11 with a relatively short inlet section 12, a conically tapered section 13, and an outlet section or tail piece 14. The chamber typically has a diameter on the order of 3 inches at the inlet end about 3/4 to 1 inch at the outlet end, with conical section and tail piece having lengths on the order of 20-27 inches and 36-54 inches, respectively.

At the inlet end, the chamber has a cylindrical side wall 16 and an annular end wall 17, with a cylindrical sleeve 18 extending through the annular wall and having an end cap or cover plate 19 at the outer end thereof. A feed inlet 21 opens through the side wall for introducing liquid at high velocity in a tangential direction into the region between the side wall and the sleeve for rotation about the axis of the chamber. The feed inlet can be of any suitable cross-sectional shape and size, such as an oval, round or rectangular.

An overflow outlet 23 passes through end cap 19 for removing the lighter or less dense liquid from the chamber. In the embodiment of Figure 1, the overflow outlet includes a vortex finder tube 24 which extends coaxially within sleeve 18 and passes through an opening 25 in the end cap. The tube has an axial passageway 26 of suitable diameter for removing the lighter liquid, e.g. 1/16 inch for removing oil.

Sleeve 18 extends within the chamber beyond the inner end of the vortex finder tube and beyond the feed inlet. It extends outside annular wall 17 a distance on the order of twice the diameter of the chamber. The sleeve can have an outside diameter on the order of 25 to 75 percent of the diameter of the large end of the chamber, e.g. an outside diameter of 1-7/8 inches, and a wall thickness on the order of 1/16 inch. The portion of the sleeve within the chamber is, thus, interposed between the feed inlet and the overflow outlet, and it serves as a shield which isolates core of lighter fluid and the overflow outlet from the effects of turbulence produced by the introduction of liquid into the chamber at high velocity. It stabilizes the core of oil or other lighter liquid, prevents short circuiting between the feed inlet and the overflow outlet, and improves collection efficiency.

The improvement in collection efficiency is illustrated graphically in Figures 2 and 3 where collection efficiency is plotted as a function of relative mean droplet size. In each figure, the upper curve shows the results obtained with a cyclone having a turbulence shield in accordance with the invention, and the lower curve shows the results obtained with the same cyclone without the shield. This particular cyclone had a 0.375 square inch feed inlet, a 1/16 inch vortex finder, and a tailpipe having a diameter of 3/4 inch and a length of 54 inches. A mixture of oil and water was supplied to the cyclone at a rate of 37 gallons per minute with a pressure drop across the cyclone of 37-40 PSI.

In the tests illustrated in Figure 2, the flow split between the overflow and underflow outlets was set to deliver 2 percent of the liquid to the overflow outlet. With this flow split, the turbulence shield increased the recovery rate or collection efficiency by between about 5 and 10 percent for different droplet sizes. This is a significant improvement.

In the tests illustrated in Figure 3, the flow split was set to deliver between 1 and 1.2 percent of the liquid to the overflow outlet, and the improvement provided by the shield was even more dramatic, being on the order of 15 to 20 percent for different droplet sizes.

These tests demonstrate that the beneficial effects of the turbulence shield are most pronounced at lower flow splits, where instability is more of a problem. The lowest possible flow split consistent with satisfactory efficiency is highly desirable in commercial operation, however, the existing state of the art cyclone tends to become increasingly unstable under low flow split conditions. In contrast the turbulence shield is stable at low flow split conditions, making this device greatly superior for commercial operation.

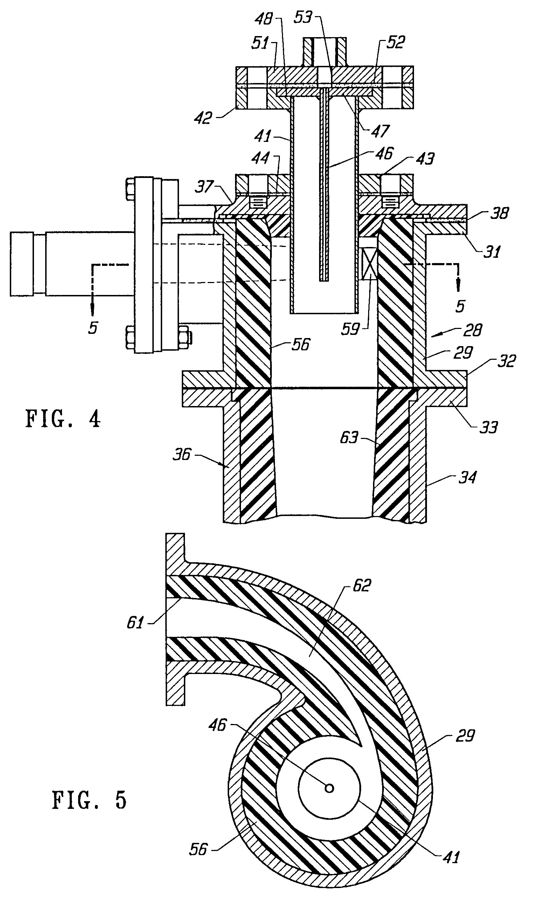

In the embodiment illustrated in Figure 4, the inlet section has a steel housing 28 with a cylindrical side wall 29 and flanges 31, 32 at the upper and lower ends of the side wall. Lower flange 32 is bolted to a flange 33 at the upper end of side wall 34 of conical section 36, and an annular head piece 37 is bolted to upper flange 31, with a gasket 38 providing a liquid tight seal between the head piece and the flange. Cylindrical sleeve 41 is welded to an annular flange 42 at the upper end thereof and to an annular flange 43 about midway along its length. The sleeve passes through the opening in headpiece 37, and flange 43 is bolted to the upper side of the head piece, with the sleeve positioned coaxially of housing wall 29 and a gasket 44 between the flange and the head piece. A vortex finder tube 46 is welded to an annular flange 47 which is received in a counterbore 48 in the upper side of flange 42. A cover plate 51 is bolted to flange 42, with a gasket 52 providing a seal between the cover plate, flange 42 and the vortex finder flange. The cover plate has an axial opening 53 aligned with the vortex finder tube, with a threaded fitting on the upper side of the plate communicating with the passageway for connection to a suitable outlet line (not shown).

The inlet section has an elastomeric liner 56 (e.g., urethane) adjacent to side wall 29 and a headliner 57 on the underside of head piece 37. Feed inlet 59 comprises a tangentially extending port 61 which opens through side wall 29 and an involute passageway 62 of rectangular cross-section in liner 56. The side wall 34 of conical section 36 has a liner 63.

As in the embodiment of Figure 1, the lower end of sleeve 41 extends below the lower end of vortex finder tube 46 and below the feed inlet 59 to shield the vortex finder and the core of oil or other liquid from the effects of the turbulence produced by liquid entering the chamber at high velocity.

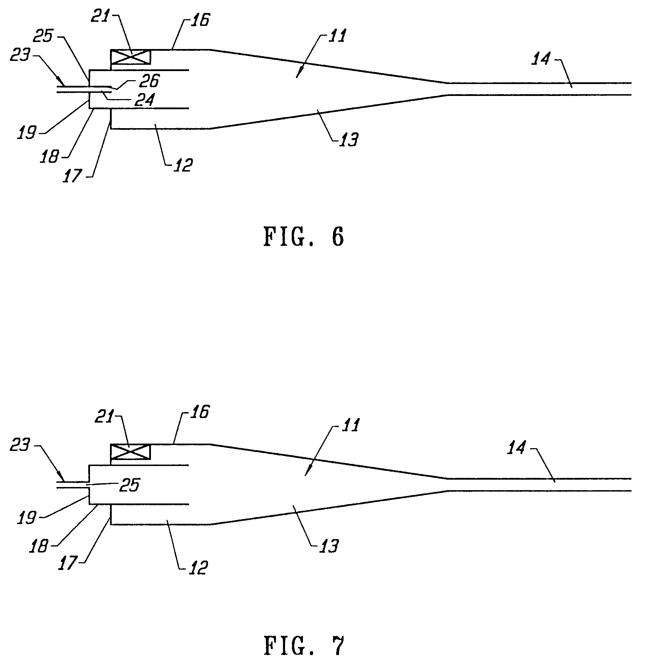

The embodiments of Figures 6 and 7 are similar to the embodiment of Figure 1, and like reference numerals designate corresponding elements in the three figures. In the embodiment of Figure 5, however, the vortex finder tube 24 extends only a short distance into the sleeve beyond annular wall 14. In the embodiment of Figure 6, there is no vortex finder tube, and the opening 25 in end wall 19 serves as the overflow outlet. Operation and use of these embodiments is similar to that of the other embodiments, with the cylindrical sleeve 18 again shielding the core of oil and the overflow outlet from the turbulence produced by liquid entering the chamber at high velocity.

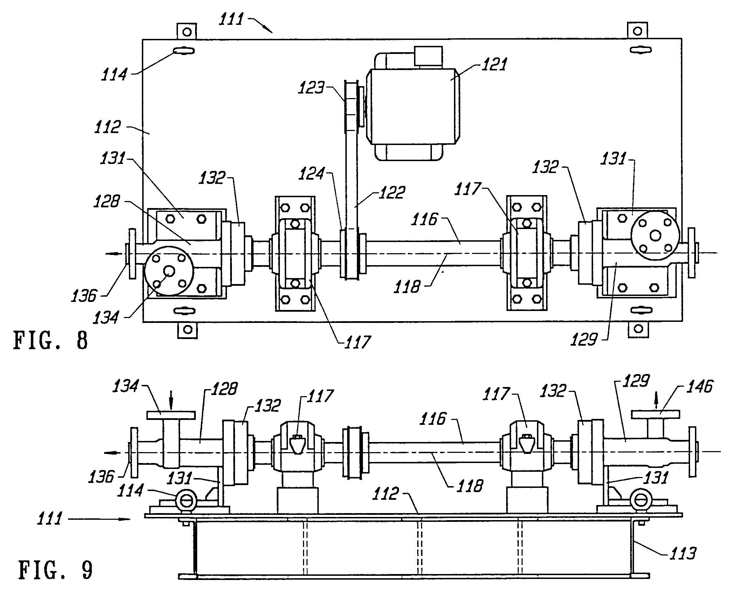

In the embodiment of Figure 8, the hydrocyclone separator has a generally rectangular base 111 comprising a horizontally extending plate or deck 112 supported by a frame 113, with lifting rings 114 near the corners of the deck.

An elongated cylinder 116 of circular cross-section is rotatively mounted in pillow blocks 117 affixed to the base for rotation about its axis 118. A drive motor 121 is mounted on the base, with a gearbelt 122 trained about pulleys 123, 124 on the motor shaft and cylinder for rotating the cylinder about its axis. The cylinder has a side wall 126 surrounding a chamber 127 through which the fluids to be separated are passed. The chamber can be of any suitable length and diameter, and in one present embodiment has a length on the order of 124 inches and a diameter on the order of two inches.

An inlet head 128 and an outlet head 129 are mounted in stationary positions on mounting brackets 131 affixed to the base at opposite ends of the cylinder, with rotary seal assemblies 132 providing fluid-tight seals between the heads and the cylinder. The inlet head has an axial bore 133 which forms one end portion of chamber 127, with an involute or tangential feed inlet 134 for introducing a mixture of liquids such as oil and water into the chamber at high velocity in a tangential direction. The tangential velocity causes the liquids to rotate within the chamber as they pass through it from the inlet head toward the outlet head, producing centrifugal forces which separate the liquids according to their densities or specific gravities, with the heavier or more dense liquids being concentrated near the outer wall of the chamber and the lighter or less dense liquid being concentrated near the axis. The feed inlet can be of any suitable cross-sectional shape and size, such as oval, round or rectangular.

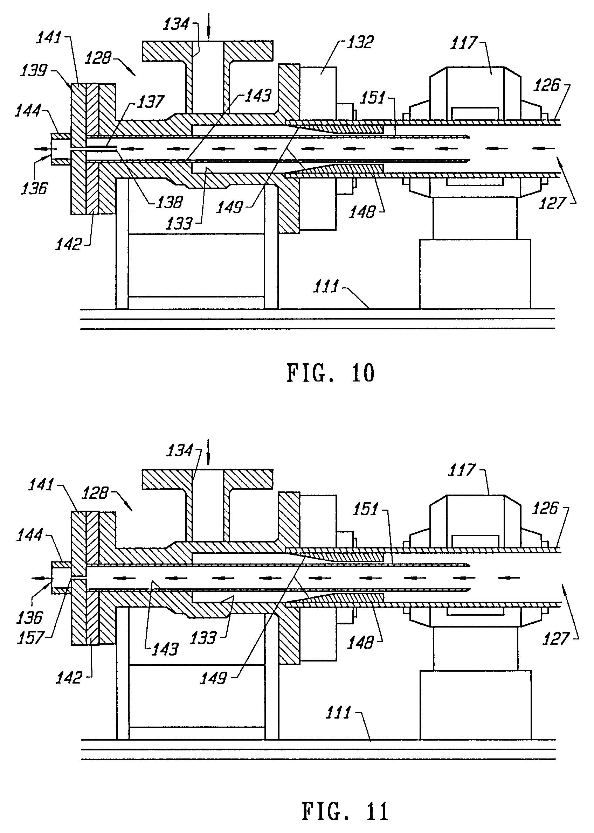

The inlet head also includes an axial overflow outlet 136 through which the lighter or less dense liquid is removed from the chamber. As illustrated in Figure 10, this outlet comprises a vortex finder tube 137 which extends a short distance into the chamber, with an axial passageway 138 of relatively small diameter (e.g., 11/16 inch) through which the liquid concentrated near the axis is discharged. The vortex finder tube is mounted on an endpiece 139 which has a flange 141 bolted to the inlet head, with a gasket 142 providing a seal between the endpiece and the head. The finder tube is disposed coaxially of an axial bore 143 in the inlet head, and the endpiece has a threaded fitting 144 which communicates with the passageway in the finder tube and provides means for connecting an outlet line to the separator.

The outlet head is similar to the inlet head, with the tangential opening serving as an underflow outlet 146 for the more dense liquid which is concentrated toward the outer wall of the chamber, and the axial bore in the head being closed by a suitable plug or cap (not shown), with no vortex finder tube or other axial opening.

A plurality of longitudinally extending impeller vanes 148 project inwardly in a radial direction from the side wall of cylinder 116 to enhance the rotation of the liquids within the chamber. These vanes are of limited axial extent and are located toward the inlet end of the cylinder. They are affixed to the side wall by suitable means such as brazing or welding. The end portions 149 of the impeller vanes are tapered toward the feed inlet, with the vanes increasing in radial extent or effective area along the length of the cylinder away from the feed inlet. This results in a relatively gradual increase in the angular velocity, or rotational acceleration, of the liquid as it travels through the chamber, thereby reducing the amount of turbulence produced by the vanes.

A turbulence shield 151 is provided at the inlet end of the chamber to isolate the core of lighter liquid and the overflow outlet from the effects of turbulence produced by liquids entering the chamber and interacting with the impeller vanes. The shield comprises an elongated sleeve or tubular member which is mounted in the bore 143 in the inlet head and extends coaxially of the cylinder to a point well beyond the impeller vanes. The vortex finder tube 152 is set well back within the turbulence shield. As in the previous embodiments, the shield stabilizes the core of oil or other lighter liquid, prevents short circuiting between the feed inlet and the overflow outlet, and improves collection efficiency.

In operation and use, a mixture of liquids to be separated, such as oil and water, is pumped into the separator through feed inlet 134 and enters the chamber with a tangential velocity which causes the liquid to rotate within the chamber. This rotation and the centrifugal forces resulting therefrom are increased by the rotation of the cylinder. The less dense liquid (e.g., oil) is thereby concentrated in a core near the axis and discharged through vortex finder tube 131, while the more dense liquid (e.g., water) is concentrated near the outer or side wall of the chamber and discharged through the tangential opening 146 in outlet head 129.

The tapered vanes produce less turbulence than the straight vanes would, and the turbulence shield provides a quiescent zone in which the core of oil or other lighter liquid can stabilize, prevents short circuiting between the feed inlet and the overflow outlet, and improves collection efficiency. Since the shield extends well beyond the areas of turbulence produced by the feed entry and the rotating vanes, the core of oil and the overflow outlet are well isolated from both of these disturbances.

The embodiment of Figure 11 is similar to the embodiment of Figure 10, and like reference numerals designate corresponding elements in these two figures. The embodiment of Figure 11 differs from the embodiment of Figure 10, however, in that the overflow outlet comprises an axial opening 157 in endpiece 139 instead of a vortex finder tube. Operation and use of this embodiment are substantially identical to that of Figure 10.

It is apparent from the foregoing that a new and improved hydrocyclone separator has been provided. While only certain presently preferred embodiments have been described in detail, as will be apparent to those familiar with the art, certain changes and modifications can be made without departing from the scope of the invention as defined by the following claims.

## Claims

1. A hydrocyclone for separating a less dense liquid from a more dense liquid, comprising a chamber having an axis, a feed inlet for introducing liquid into the chamber at high velocity so that the liquid rotates about the axis and the less dense liquid forms into a core along the axis, and an axially disposed outlet opening for removing the core of less dense liquid from the chamber, characterized by means for stabilizing the core of less dense liquid as it moves toward the outlet opening.

2. A hydrocyclone as defined by Claim 1, further characterized in that the means for stabilizing the core comprises a shield of greater diameter than the outlet opening positioned between the feed inlet and the outlet opening for isolating the core of less dense liquid from the effects of turbulence produced by liquid entering the chamber.

3. A hydrocyclone as defined by Claim 2, further characterized in that the shield has a diameter on the order of 25 to 75 percent of the diameter of the chamber.

4. A hydrocyclone as defined by Claim 1, further characterized in that the means for stabilizing the core comprises a cylindrical sleeve positioned coaxially within the chamber adjacent to the feed inlet and extending axially beyond the chamber, with the outlet opening being of smaller diameter than the sleeve and being disposed at an end of the sleeve outside the chamber so that the core of less dense liquid will travel through the sleeve and beyond the chamber before reaching the outlet opening.

5. A hydrocyclone as defined by Claim 1, further characterized in that the chamber comprises a conical section having ends of greater and lesser diameter, and an inlet section having a cylindrical side wall aligned with the conical section at the end of greater diameter, with the feed inlet opening through the side wall of the inlet section.

6. A hydrocyclone as defined by Claim 5, further characterized by a cylindrical extension of lesser diameter than the cylindrical side wall aligned axially with the side wall at the end of the side wall opposite the conical section, and an end wall at an outer end of the cylindrical extension, with the outlet opening being of smaller diameter than the extension and opening through the end wall.

7. A hydrocyclone as defined by any of the foregoing claims, further characterized by a vortex finder tube in which the outlet opening is formed.

8. A hydrocyclone as defined by Claim 1, further characterized by means for rotating the chamber about the axis to produce a centrifugal force which enhances separation of the liquids.

9. A hydrocyclone as defined by Claim 8, further characterized in that the chamber has a plurality of tapered impeller vanes which increase in radial extent away from the feed inlet for gradually accelerating rotation of the liquids as they move away from the inlet.

10. A hydrocyclone as defined by Claim 9, further characterized in that the means for stabilizing the core of less dense liquid comprises an axially disposed shield which extends from the feed inlet past the vanes so as to isolate the outlet from the effects of turbulence produced by liquid entering the chamber and from the effects of turbulence produced by the vanes.
